# EUROPEAN PATENT SPECIFICATION

(11) **EP 3 021 697 B1**
(45) Date of publication and mention of the grant of the patent: **20.06.2018**
(21) Application number: 14735601.8
(22) Date of filing: 07.07.2014
(51) Int. Cl.: A24D 3/02, A24F 47/00, A24D 1/00, B32B 1/00, B32B 5/02, B32B 5/18, B32B 7/12, B32B 37/00, B32B 38/00, B32B 37/12, B32B 37/20, B32B 1/08

(54) **METHOD OF MANUFACTURING AN AIRFLOW DIRECTING SEGMENT FOR A SMOKING ARTICLE**
VERFAHREN ZUR HERSTELLUNG EINES LUFTSTROMLEITSEGMENTS FÜR EINEN RAUCHARTIKEL
PROCÉDÉ DE FABRICATION D'UN SEGMENT DE GUIDAGE D'ÉCOULEMENT D'AIR POUR UN ARTICLE À FUMER

(30) Priority: 18.07.2013 EP 13177125
(43) Date of publication of application: 25.05.2016
(73) Proprietor: Philip Morris Products S.A., 2000 Neuchâtel (CH)
(72) Inventor: MIRONOV, Oleg, CH-2000 Neuchatel (CH); GRANT, Christopher John, CH-2000 Neuchatel (CH)
(74) Representative: Palmer, Benjamin Jeffrey
(86) International application number: PCT/EP2014/064461
(87) International publication number: WO 2015/007556

(56) References cited:
- WO-A2-2013/102609
- GB-A- 2 020 158
- US-A- 3 860 011
- US-A- 4 037 524
- US-A1- 2009 165 935

## Description

The present invention relates to a method of manufacturing an airflow directing segment for a smoking article. The invention further relates to the apparatus for manufacturing an airflow directing segment for a smoking article.

Known airflow directing segments, or similar hollow segments with air permeable porous material, are manufactured in at least a two-stage process. The first stage being the manufacture of a hollow tube, and then in a separate process, an air permeable porous material material is provided about the hollow tube, and then wrapped in an outer wrapper material.

For example, US 4,648,858 discloses an apparatus for manufacturing a filter rod having a hollow tube extending longitudinally through the filter rod. The apparatus includes a supply reel of pre-formed hollow tubing, a supply of filter material web, and a garniture funnel into which the filter material web and hollow tubing are continuously, concurrently fed for wrapping the filter material web into a cylindrical configuration enclosing the hollow tube longitudinally therein. The apparatus also includes a plasticizer or adhesive applicator for coating the outside wall surface of the tube with a plasticizer or adhesive before it is fed into the garniture funnel, and a tube guide nozzle located at the inlet to the garniture funnel for positioning and guiding the hollow tube into the garniture funnel.

US 4,179,323 and US 3,860,011 each disclose a similar apparatus to produce a hollow filter rod. In each case, the apparatus includes a mandrel through which a supplied length of pre-formed tubing is passed, a nozzle surrounding the mandrel for shaping a stream of fibrous filter material about the mandrel and a forming means for enveloping a web of paper about the fibrous filter material and the tubing to produce the filter rod. The mandrel can be adjusted relative to the forming means to ensure the tubing is accurately centred within the filter rod.

It is an object of the present invention to provide a method and apparatus that enables the more efficient manufacture of airflow directing segments for smoking articles.

According to an aspect of the present invention, there is provided a method
according to claim 1 of manufacturing an airflow directing segment for a smoking article. The method comprises the steps of: feeding a substantially continuous web of material, the web material having a first longitudinal edge and a second longitudinal edge; applying adhesive to a first side of the web material, adjacent the first edge of the web material; forming the web material into a channel; forming the channel of web material into a closed tube, the first edge overlapping with the second edge; compressing the tube of web material to adhere the first side of the first edge to the second side of the second edge; feeding at least one substantially continuous porous material about the formed tube of web material to form a substantially continuous airflow directing segment; and cutting the substantially continuous airflow directing segment to form discrete airflow directing segments.

Preferably, the porous material is affixed to the formed tube of web material using the adhesive applied to the web material. To enable the porous material to be affixed to the formed tube of web material, the step of applying adhesive to the first side of the web material preferably comprises applying sufficient adhesive such that at least a portion of the adhesive is extruded from the seam between the first edge and the second edge of the web material during the compressing step.

The porous material may be alternatively affixed by a separately applied adhesive. Alternatively, the porous material may be held in place around the formed tube of web material by any other suitable method of fixation known to those skilled in the art, including, for instance, embossing, hooks, or any other suitable means that facilitates resisting movement of the porous material around the formed tube of web material.

Providing such a method enables airflow directing segments to be manufactured "online", which increases the efficiency of the manufacturing process by reducing the number of manufacturing steps as compared to the known airflow directing segment, or hollow filter segment, processes.

As used herein, the term "online" refers to a process which occurs as part of a continuous sequence of operations.

As used herein, the term "formed tube" refers to a closed tube of web material after the first side of the first edge and the second side of the second edge of the web material have been adhered together.

In addition, providing such a method enables a reduction in the space required for the machinery because the airflow directing segments can be manufactured "online".

If adhesive is applied to the first side of the web material, adjacent the first edge of the web material, the first side of the web material may face towards the inside of the channel. In this embodiment, the second side of the web material, adjacent the second edge of the web material, faces towards the outside of the channel.

In an alternative embodiment, the first side of the web material may face towards the outside of the channel. In this embodiment, the second side of the web material, adjacent the second edge of the web material, faces towards the inside of the channel

To yet further increase the efficiency of the process, the method may comprise wrapping the airflow directing segment in an outer web material. Preferably, the outer web material is an outer wrapper which is substantially air impermeable. Air flow directing segments according to the invention may comprise outer wrappers formed from any suitable material or combination of materials. Suitable materials are well known in the art and include, but are not limited to, cigarette paper.

In the embodiment where the airflow directing segment is wrapped by the outer web material, the outer web material has a first longitudinal edge and a second longitudinal edge. The method preferably comprises: applying adhesive to a first side of the outer web material, adjacent the first edge of the outer web material; forming the outer web material into a channel about the airflow directing segment; forming the channel of outer web material into a closed tube, the first edge overlapping with the second edge; controlling the external conditions adjacent the outer web material in the region adjacent the adhesive; and compressing the tube of outer web material to adhere the first side of the first edge to the second side of the second edge.

If adhesive is applied to the first side of the outer web material, adjacent the first edge of the outer web material, the first side of the outer web material may face towards the inside of the channel partially surrounding the formed tube of web material. In this embodiment, the second side of the outer web material, adjacent the second edge of the outer web material, faces towards the outside of the channel.

In an alternative embodiment, the first side of the outer web material may face towards the outside of the channel partially surrounding the formed tube of web material. In this embodiment, the second side of the outer web material, adjacent the second edge of the outer web material, faces towards the inside of the channel.

In one embodiment, the adhesive is applied to the first side of the outer web material adjacent the first edge of the outer web material. In this embodiment, the first side of the outer web material faces towards the inside of the channel.

In an alternative embodiment, the adhesive is applied to the second side of the outer web material adjacent the first edge of the outer web material. In this embodiment, the first side of the outer web material faces towards the inside of the channel, while the second side of the outer web material faces towards the outside of the channel.

Preferably, the adhesive is provided in a substantially continuous line.

Preferably, the method further comprises controlling the external conditions adjacent the web material in the region adjacent the adhesive.

Preferably the adhesive is heat activated, and such adhesives are well-known in the art. In an alternative embodiment the adhesive is pressure activated. Where the adhesive is heat activated, the step of controlling the external conditions adjacent the the web material includes controlling the temperature. The temperature may be controlled by active heating. The active heater may be a heated roller, such as an electrically heated roller.

In an alternative embodiment, the temperature is controlled by passive heating. The passive heating is generated by friction between the web material and the machinery used to form the airflow directing element.

The step of controlling the temperature of the web material may comprise cooling. The cooler may be a thermoelectric cooler, such as a peltier effect cooler, or alternatively the cooler may be a more conventional heat pump utilising a liquid coolant.

In a further embodiment, a second adhesive may be applied to the first side of the web material, adjacent the first edge of the web material and adjacent the first adhesive. Alternatively, the second adhesive may be applied to the second side of the web material, adjacent the second edge of the web material. In this embodiment, one adhesive is a relatively fast-setting adhesive while the other adhesive is a relatively slow-setting adhesive. Preferably, in this alternative embodiment, the first and second adhesives are positioned so that they do not overlap with each other when the first side of the first edge is overlapped with the second side of the second edge of the web material. Preferably, the fast-setting adhesive is a hot-melt adhesive, or other similar relatively fast-setting adhesive known in the art. Preferably, the other adhesive is a PVA glue, or other similar slow-setting adhesive. The other adhesive preferably has a greater bond strength, reduced air permeability, and improved thermal resistance than the fast-setting adhesive. By providing two substantially continuous lines of adhesive in this way, the fast-setting adhesive adhesive enables the web material to be held in position quickly while the second adhesive cures, and thus a faster process can be provided while still having the desired properties of a tube having low air permeability, high bond strength and high resistance to thermal degradation.

As will be appreciated, a similar method step of applying a second adhesive may be used to seal the wrapper of outer web material.

The method may preferably further comprise: feeding a further substantially continuous web of material, the further web material having a first longitudinal edge and a second longitudinal edge; applying adhesive to a first side of the further web material, adjacent the first edge of the further web material; forming the further web material into a channel partially surrounding the formed tube of web material; forming the channel of further web material into a closed tube enclosing the formed tube of web material, the first edge of the further web material overlapping with the second edge of the further web material; controlling the external conditions adjacent the further web material in the region adjacent the adhesive; and compressing the tube of further web material to adhere the first side of the first edge to the second side of the second edge; wherein, the overlapping portion of the further web material is spaced apart from the overlapping portion of the web material.

As used herein, the term "spaced apart from" refers to the overlapping portions being spaced apart around the circumference of the formed tubes.

If adhesive is applied to the first side of the further web material, adjacent the first edge of the further web material, the first side of the further web material may face towards the inside of the channel partially surrounding the formed tube of web material. In this embodiment, the second side of the further web material, adjacent the second edge of the further web material, faces towards the outside of the channel.

In an alternative embodiment, the first side of the further web material may face towards the outside of the channel partially surrounding the formed tube of web material. In this embodiment, the second side of the further web material, adjacent the second edge of the further web material, faces towards the inside of the channel.

Preferably, the overlapping portion of the further web material is substantially diametrically opposite the overlapping portion of the web material. By providing a further web material to form a second tube enclosing the first tube so that a double walled closed tube is provided, a tube can be provided that is yet more air impermeable than having a single walled tube. Such a double walled tube enables a more efficient airflow directing segment to be manufactured.

The web material used to form the tube is preferably between about 60 µm (microns) and about 160 µm thick. In one embodiment, where the tube has a single wall, the web material is preferably about 140 µm thick. In a further embodiment, where the tube has a double wall, the web material is between about 70 µm and about 90 µm, more preferably between about 75 µm and about 85 µm.

The substantially continuous web material preferably has a width such that the formed tube has an inner diameter of between about 2 mm and about 5mm, and the first edge overlaps the second edge by between about 1mm and about 4 mm. Preferably, the web material is fed as a pre-cut width of web material. In an alternative embodiment, the method further comprises cutting the web material to a desired width before the step of applying adhesive.

The method may further comprise perforating the web material adjacent the second longitudinal edge. In an alternative embodiment, the material may be provided with perforations before the web material is fed into the airflow directing segment manufacturing machinery. The perforations are preferably in the region where the adhesive is applied. By providing perforations in this region, the adhesive may penetrate the perforations and facilitate an improved bond between the first longitudinal edge and the second longitudinal edge of the web material. In this way an improved air impermeable seal may be provided to prevent leakage of air from within the closed tube to without the close tube during use in a smoking article.

In certain embodiments, where an outer web material is provided, a longitudinal edge of the outer web material may be perforated in the region where adhesive is provided. Similarly, by providing perforations in this region, the adhesive may penetrate the perforations and facilitate an improved bond between the first longitudinal edge and the second longitudinal edge of the outer web material.

In the embodiment comprising wrapping the airflow directing segment in an outer web material, the method may further comprise: wrapping the outer web material in a further outer web of material, the further outer web material having a first longitudinal edge and a second longitudinal edge; applying adhesive to the further outer web material, adjacent the first edge of the further outer web material; forming the further outer web material into a channel partially surrounding the formed tube of outer web material; forming the channel of further outer web material into a closed tube enclosing the formed tube of outer web material, the first edge of the further outer web material overlapping the second edge of the further outer web material; controlling the external conditions adjacent the further outer web material in the region adjacent the adhesive; and compressing the tube of further outer web material to adhere the first side of the first edge to the second side of the second edge; wherein, the overlapping portion of the further outer web material is spaced apart from the overlapping portion of the web material.

Preferably, the overlapping portion of the further outer web material is substantially diametrically opposite the overlapping portion of the outer web material. By providing a further outer web material to form a second wrapper enclosing the first wrapper so that a double walled wrapper is provided, a wrapper can be provided that is yet more air impermeable than having a single walled wrapper. Such a double walled wrapper enables a more efficient airflow directing segment to be manufactured.

The outer web material used for the wrapper may be thinner than the web material used for the inner formed tube of the airflow directing segment. The outer web material is preferably between about 20 µm (microns) and about 160 µm thick. More preferably, the outer web materials is between about 40 µm and about 140 µm thick. In embodiments where the wrapper has a single wall, the outer web material is most preferably between about 50 µm to about 120 µm thick. In a further embodiment, where the wrapper has a double wall, the outer web material is between about 20 µm and about 60 µm thick..

Where the method comprises providing an outer web material, the method preferably further comprises providing additional material at at least one position within the volume occupied by the porous material to increase the resistance-to-draw of air through the volume occupied by the porous material. By providing additional material, the resistance-to-draw of the airflow directing segment can be controlled to control the airflow through this volume. In this embodiment, the resistance-to-draw along the longitudinal direction of the airflow directing segment through the volume occupied by the porous material is non-uniform.

As used herein, the term "volume occupied by the porous material" refers to the volume bounded by the outer surface of the formed tube of web material on one side, and the inner surface of the formed tube of outer web material on the other side.

Preferably, the additional material is provided at a position substantially equidistant from each end of the airflow directing segment. Providing the material at a position substantially equidistant from each end of the airflow directing segment, that is to say at approximately the centre of the airflow directing segment, enables a substantially symmetric airflow directing segment to be provided. By providing a substantially symmetric airflow directing segment, the manufacturing process of incorporating the airflow directing segment into a smoking article may be simplified, because the orientation of the airflow directing segment does not need to be known.

In an alternative embodiment, the additional material may be provided at or toward one end of the airflow directing segment. In this alternative embodiment, the additional material provided at or toward one end of the airflow directing segment may be air impermeable and substantially seals the airflow directing segment from air flow therethrough.

The additional material reduces the cross-sectional area for airflow in the volume occupied by the porous materia, and therefore increases the resistance-to-draw through the volume occupied by the porous material. Any suitable material may be used, and in particular may be any of adhesive, beads, paper, any other such materials, or any combination thereof. By providing adhesive, the step of providing additional material may be simplified. Suitable materials are known in the art and include, but are not limited to, cardboard, plastic, wax, silicone, ceramic and combinations thereof.

The provided porous material is air permeable, and is preferably substantially thermally stable at the temperature of the aerosol generated by the transfer of heat from the heat source to the aerosol-forming substrate when used in a smoking article as described herein. Suitable porous materials are known in the art and include, but are not limited to, cellulose acetate tow, crimped paper, cotton, open-cell ceramic and polymer foams, tobacco material and combinations thereof. In certain preferred embodiments, the porous material is a substantially homogeneous porous material, and a particularly preferred porous material is cellulose acetate tow.

The step of feeding at least one substantially continuous porous material preferably comprises feeding two or more substantially continuous porous materials, the two or more porous materials being provided substantially symmetrically about the formed tube. For example, two, three, four, five, six or more feeds of porous material may be provided.

In certain embodiments, the feed of porous material is preferably in the form of a braid. Advantageously, using a plurality of braids of porous material enables the formed tube to remain centred within the airflow directing segment.

In one embodiment, the adhesive, provided to bond the first edge of the web material to the second edge of the web material, is positioned such that any excess adhesive acts to adhere the porous material to the formed tube.

In certain embodiments, the method comprises providing at least one air inlet in the outer web material. The method may comprise providing between one and 20 air inlets, preferably between one and ten air inlets. The at least one air inlet is preferably located towards a first end of the airflow directing element. The at least one air inlet is preferably provided after the air flow directing segment has been wrapped by the outermost web of material surrounding the air flow directing segment in a smoking article according to the invention.

The method may comprise providing a plurality of rows of air inlets, each row comprising a plurality of air inlets. In this embodiment, the rows preferably circumscribe the airflow directing segment. The rows of air inlets may be separated by between about 0.5 mm and about 5.0 mm along the longitudinal length of the airflow directing segment. Preferably the rows of inlets are separated by about 1.0 mm.

The method may further comprise providing the airflow directing segment with an aerosol-modifying agent. Suitable aerosol-modifying agents include, but are not limited to: flavourants; and chemesthetic agents.

As used herein, the term "flavourant" is used to describe any agent that, in use, imparts one or both of a taste or aroma to an aerosol generated by the aerosol-forming substrate of the smoking article comprising the airflow directing segment.

As used herein, the term "chemesthetic agent" is used to describe any agent that, in use, is perceived in the oral or olfactory cavities of a user by means other than, or in addition to, perception via taste receptor or olfactory receptor cells. Perception of chemesthetic agents is typically via a "trigeminal response," either via the trigeminal nerve, glossopharyngeal nerve, the vagus nerve, or some combination of these. Typically, chemesthetic agents are perceived as hot, spicy, cooling, or soothing sensations.

The aerosol directing segment may be provided with an aerosol-modifying agent that is both a flavourant and a chemesthetic agent. For example, the aerosol directing segment may be provided with menthol or another flavourant that provides a cooling chemesthetic effect.

The aerosol directing element may be provided with a combination of two or more different aerosol-modifying agents.

Preferably, the airflow directing element is provided with a flavourant. The airflow directing element may be provided with any flavourant capable of releasing one or both of a flavour or aroma into air drawn through the airflow directing segment.

Each aerosol directing segment may be provided with any suitable quantity of aerosol-modifying agent. In one preferred embodiment of the invention, the aerosol directing element is provided with about 1.5 mg or more of a flavourant.

In one embodiment, the menthol is provided as a thread or any other suitable substrate, including but not limited to a capsule, that can hold menthol inside the formed tube. Alternatively or additionally, a thread or any other suitable substrate that can hold menthol is placed outside the formed tube, nested within the porous material. Alternatively or additionally, a bead of menthol may be applied within the formed tube, to the outside of the formed tube, within the porous material, to the interior of the outer web material, or any combination thereof.

According to a further aspect of the present invention, there is provided apparatus according to claim 10 for manufacturing an airflow directing segment for a smoking article. The apparatus comprises: a feeder for feeding a substantially continuous web of material, the web material having a first longitudinal edge and a second longitudinal edge; means for applying adhesive to the first side of the web material, adjacent the first edge of the web material; means for forming the web material into a channel; means for forming the channel of web material into a closed tube, the first edge overlapping the second edge; means for compressing the tube of web material to adhere the first side of the first edge to the second side of the second edge; at least one feeder, the at least one feeder being configured to feed substantially continuous porous material about the formed tube, wherein the porous material is affixed to the formed tube of web material. A cutter cuts the substantially continuous airflow directing segment to form discrete airflow directing segments.

Preferably, the apparatus further comprises means for controlling the external conditions adjacent the web material in the region adjacent the adhesive.

The porous material is preferably affixed by the adhesive applied to the first side of the web material to form a substantially continuous airflow directing segment. The porous material is preferably affixed by the adhesive used to adhere the first side of the first edge to the second side of the second edge. The porous material may be alternatively affixed by a separately applied adhesive. Alternatively, the porous material may be held in place around the formed tube of web material by any other suitable method of fixation known to those skilled in the art, including, for instance, embossing, hooks, or any other suitable means that facilitates resisting movement of the porous material around the formed tube of web material.

Providing such an apparatus enables airflow directing segments to be manufactured "online", which increases the efficiency of the manufacturing process by reducing the complexity of the apparatus as compared to the known airflow directing segment, or hollow filter segment, apparatus.

In addition, providing such an apparatus enables a reduction in the space required for the machinery because the airflow directing segments can be manufactured "online".

In order to further improve the efficiency of the manufacturing apparatus, the apparatus may further comprise means for wrapping the airflow directing segment in an outer web material, such as for example, a cigarette or filter rod making garniture. Preferably, the outer web material is an outer wrapper which is substantially air impermeable. Air flow directing segments according to the invention may comprise outer wrappers formed from any suitable material or combination of materials. Suitable materials are well known in the art and include, but are not limited to, cigarette paper.

Preferably, the means for forming the web material into a channel comprises a first roller, the first roller having a substantially symmetrical concave contact surface. The means for forming the channel of web material into a closed tube preferably further comprises a set of second rollers, each of the second rollers having a non-symmetrical concave contact surface.

As used herein, the term "contact surface" refers to the portion of the roller configured to contact and deform the web material.

Preferably, the compressing means comprises a third roller, the third roller configured to having a substantially symmetrical concave contact surface for ensuring a closed joint between the first edge and the second edge.

The compressing means preferably further comprises a mandrel. The mandrel is provided within the closed tube such that the joint between the first edge and the second edge is compressed between the mandrel and the third roller.

In one embodiment, the mandrel has a flat surface with an opposing flat surface element to compress the seam of the tube against the mandrel. In an alternative embodiment, the mandrel does not have a flat surface, but rather a curved surface with an opposing curved roller, which is preferably heated, to compress the seam of the tube against the mandrel.

As used herein, the term "seam" refers to the overlapping joint between the first and second longitudinal edges of the web material.

The apparatus preferably further comprises means for providing additional material at at least one position within the volume bounded by the formed tube of web material on one side, and the formed tube of outer web material on the other side to increase the resistance-to-draw through the volume occupied by the porous material. By providing additional material, the resistance-to-draw of through the volume occupied by the porous materiacan be controlled so as to control the airflow through this volume. In this embodiment, the resistance-to-draw along the longitudinal direction of the airflow directing segment in the volume occupied by the porous material is non-uniform.

Preferably, the additional material is provided at a position substantially equidistant from each end of the airflow directing segment. Providing the material a position substantially equidistant from each end of the airflow directing segment, that is to say at approximately the centre of the airflow directing segment, enables a substantially symmetric airflow directing segment to be provided. By providing a substantially symmetric airflow directing segment, the manufacturing apparatus for incorporating the airflow directing segment into a smoking article may be simplified, because the orientation of the airflow directing segment does not need to be known.

In an alternative embodiment, the additional material may be provided at or toward one end of the airflow directing segment. In this alternative embodiment, the porous material may be heated such that it melts, and subsequently solidifies to form the additional material which increases the resistance-to-draw.

The additional material reduces the cross-sectional area of the airflow directing segment, and therefore increases the resistance-to-draw through the volume occupied by the porous material. Any suitable material may be used, and in particular may be any of adhesive, beads, paper, any other such materials, or any combination thereof. Suitable materials are known in the art and include, but are not limited to, cardboard, plastic, wax, silicone, ceramic and combinations thereof.

The airflow directing segment may be cut to have a length of between about 7 mm and about 50 mm, more preferably a length of between about 10 mm and about 45 mm, and yet more preferably of between about 15 mm and about 30 mm. The airflow directing segment may have other lengths depending upon the desired overall length of the smoking article, and the presence and length of other components within the smoking article.

The airflow directing segment preferably has an outer diameter of between about 5 mm and about 9 mm, more preferably of between about 7 mm and about 8 mm, yet more preferably about 7.8 mm.

According to a yet further aspect of the present invention, there is provided a smoking article according to the present claim 18. The smoking article comprises a mouthpiece, an aerosol-forming substrate, a combustible heat source, and an airflow directing segment as described herein. The airflow directing segment is longitudinally adjacent the aerosol-forming substrate. Preferably, the smoking article comprises an outer wrapper. The outer wrapper facilitates combining the components of the smoking article.

The aerosol-forming substrate is preferably downstream of the heat source, and the heat source is preferably provided at a distal end of the smoking article, and the mouthpiece is provided at a mouth end.

The smoking article preferably further comprises at least one air inlet downstream of the aerosol-forming substrate; and an airflow pathway extending between the at least one air inlet and the mouth end of the smoking article. The airflow pathway comprises a first portion extending longitudinally upstream from the at least one air inlet towards the aerosol-forming substrate and a second portion extending longitudinally downstream from the first portion towards the mouth end of the smoking article.

As used herein, the term "airflow pathway" is used to describe the route along which air may be drawn through the smoking article for inhalation by a user.

As used herein, the terms "upstream" and "front", and "downstream" and "rear", are used to describe the relative positions of components, or portions of components, of the smoking article in relation to the direction in which a user draws on the smoking article during use thereof. Smoking articles according to the invention comprise a mouth end and an opposed distal end. In use, a user draws on the mouth end of the smoking article. The mouth end is downstream of the distal end.

In certain embodiments, the at least one air inlet is provided in the airflow directing segment, as described herein. As used herein, the term "air inlet" is used to describe one or more holes, slits, slots or other apertures in the outer web material, such as outer wrapper paper, or any other materials circumscribing components of smoking articles according to the invention through which air may be drawn into the first portion of the airflow pathway. The number, shape, size and location of the air inlets may be appropriately adjusted to achieve a good smoking performance.

In the preferred embodiment, the first portion of the airflow pathway and the second portion of the airflow pathway are concentric. The first portion of the airflow pathway preferably surrounds the second portion of the airflow pathway. As will be appreciated, in this preferred embodiment, the first portion of the airflow pathway is bounded by the outer surface of the formed tube of web material, and the inner surface of outer web material, and comprises the porous material provided about the formed tube. In this preferred embodiment, the second portion of the airflow pathway is bounded by the inner surface of the formed tube.

Providing a smoking article having such an airflow directing segment results in cool air being drawn through the at least one air inlet and predominantly passing upstream through the first portion of the airflow directing segment towards the aerosol-forming substrate. Advantageously, the cool air drawn through the aerosol-forming substrate reduces the temperature of the aerosol-forming substrate of the smoking article. This may substantially prevent or inhibit spikes in the temperature of the aerosol-forming substrate during puffing by a user, and so advantageously prevents or reduces combustion or pyrolysis of the aerosol-forming substrate. Furthermore, advantageously, the cool air drawn through the aerosol-forming substrate may reduce the effect of a user's puffing regime on the composition of the mainstream aerosol.

As used herein, the term "cool air" is used to describe ambient air that is not significantly heated by the heat source upon puffing by a user.

Preferably, smoking articles according to the invention comprise aerosol-forming substrates comprising a material capable of emitting volatile compounds in response to heating. Preferably, the material capable of emitting volatile compounds in response to heating is a charge of plant-based material, more preferably a charge of homogenised plant-based material. For example, the aerosol-forming substrate may comprise one or more materials derived from plants including, but not limited to: tobacco; tea, for example green tea; peppermint; laurel; eucalyptus; basil; sage; verbena; and tarragon. The plant based-material may comprise additives including, but not limited to, humectants, flavourants, binders and mixtures thereof. Preferably, the plant-based material consists essentially of tobacco material, most preferably homogenised tobacco material.

The mouthpiece of the smoking article may, for example, comprise a filter made of cellulose acetate, paper or other suitable known filtration materials. Alternatively or in addition, the mouthpiece may comprise one or more segments comprising absorbents, adsorbents, flavourants, and other aerosol modifiers and additives or combinations thereof.

Smoking articles according to the invention preferably further comprise an expansion chamber downstream of the aerosol-forming substrate and, where present, downstream of the airflow directing element. The inclusion of an expansion chamber advantageously allows further cooling of the aerosol generated by heat transfer from the combustible heat source to the aerosol-forming substrate. The expansion chamber also advantageously allows the overall length of smoking articles according to the invention to be adjusted to a desired value, for example to a length similar to that of conventional cigarettes, through an appropriate choice of the length of the expansion chamber. Preferably, the expansion chamber is an elongate hollow tube.

As used herein, the term "length" is used to describe the dimension in the longitudinal direction of the smoking article between the distal or upstream end and the proximal or downstream end.

The invention will be further described, by way of example only, with reference to the accompanying drawings in which:
- Figure 1 shows a schematic representation of the apparatus according to the invention;
- Figure 2 shows a mandrel having a curved contact surface together with a corresponding curved roller;
- Figure 3 shows a mandrel having a flat surface contact surface together with a corresponding flat roller;
- Figure 4 shows an airflow directing segment manufactured according to one embodiment of the invention;
- Figure 5 shows an airflow directing segment manufactured according to an alternative embodiment of the invention;
- Figure 6 shows an airflow directing segment manufactured according to a further alternative embodiment of the invention;
- Figure 7 shows a web material formed into a tube having perforations;
- Figure 8 shows a formed tube having a double wall;
- Figure 9 shows a cross-section of an airflow directing segment having three braids of porous material;

Figure 10 shows a cross-section of an airflow directing segment having six braids of porous material;
Figure 11 shows a cross-section of an airflow directing segment having a flavour thread within the formed tube;
Figure 12 shows a cross-section of an airflow directing segment having a flavour thread within the porous material; and
Figure 13 shows a smoking article comprising an airflow directing segment according to the invention.

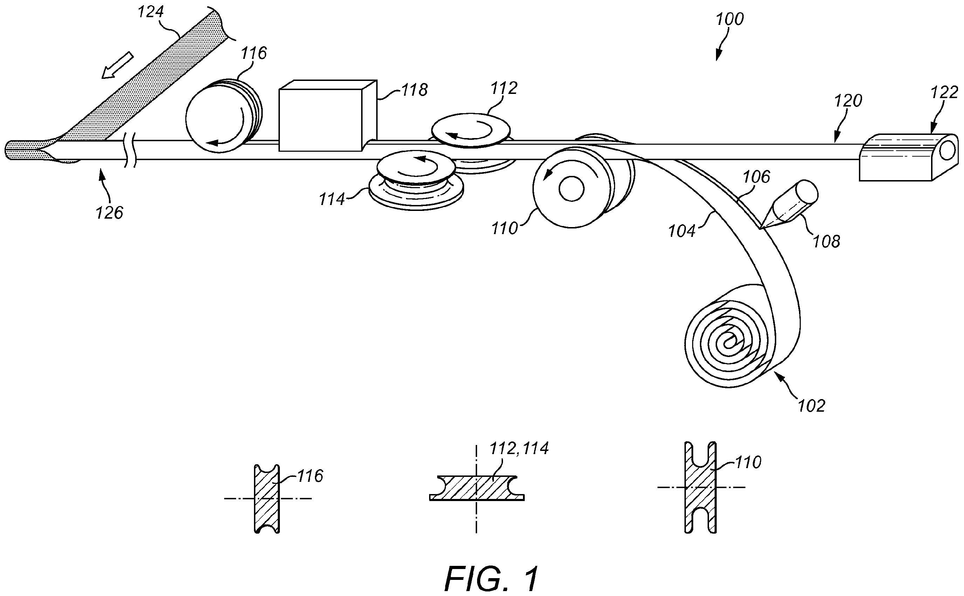

Figure 1 shows a schematic representation of an apparatus 100 for manufacturing airflow directing segments for smoking articles. The apparatus 100 comprises a bobbin 102 of substantially continuous web material, the web material 104 is fed from the bobbin into the rollers for forming a closed tube of web material. A substantially continuous line of adhesive 106 is applied to a first longitudinal edge of the web material 104 from the adhesive applicator 108. The rollers for forming a closed tube of web material comprise: a first roller 110 having a substantially symmetric and relatively deep concave cross-sectional profile; a set of second rollers 112, 114 each having an asymmetric concave cross-sectional profile; and a third roller 116 having a substantially symmetric and relatively shallow concave cross-sectional profile.

In this example, a heater 118 is provided between the set of second rollers 112, 114 and the third roller 116. In other examples, a cooler (not shown) may be provided in addition to the heater 118 or instead of the heater.

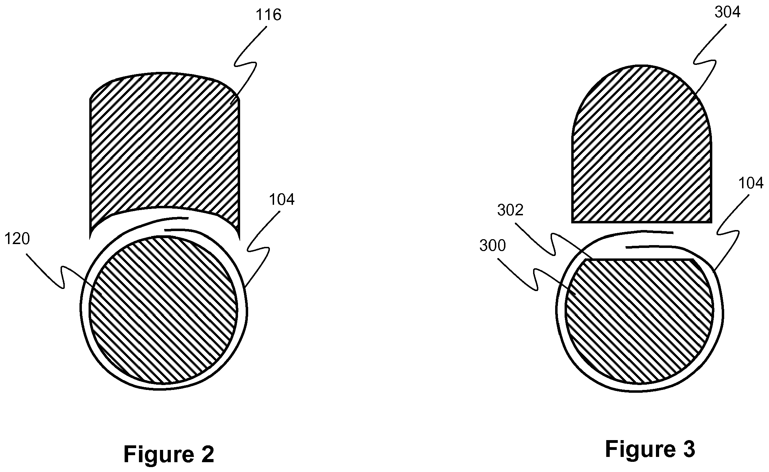

The apparatus further comprises a mandrel 120 around which the closed tube is formed by the rollers 110, 112, 114 and 116. The mandrel is held stationary relative to the rollers by the mandrel holder 122. In this example, and as shown in Figure 2, the mandrel 120 has a continuously curved cross-sectional profile, such as a circular cross-sectional profile. In other examples, and as shown in Figure 3, the mandrel 300 has a curved cross-sectional profile with a flat section 302. In this example, the roller 304 has a flat cross-sectional profile, and is used instead of roller 116.

The apparatus further comprises a feeder (not shown) for feeding a porous material 124 around the formed closed tube 126. In addition, means (not shown) for stretching in the transverse direction, and thinning, the feed of porous material are provided. In one example, the means for stretching and thinning the porous material is a set of cylindrical rollers. The porous material is preferably cellulose acetate tow in the form of a braid of material, but other such porous materials may be used. In a preferred example, a plurality of braids of cellulose acetate tow are fed around the formed closed tube. For example, three, four, five, six or more braids of porous material are provided.

In one example, the apparatus further comprises means for feeding an outer web material, and wrapping the outer web material around the porous material to form a substantially continuous airflow directing segment. The means for wrapping the outer web material may be similar to the rollers for forming the closed tube, as described above. That is to say, a number of rollers with concave profiles are provided to wrap the outer web material about the porous material in stages. Alternatively, a linear garniture may be used.

A cutter (not shown) is provided after the porous material is provided around the formed closed tube to cut individual, discrete, airflow directing segments. The cutter may be a flying blade or other such suitable cutter.

In use, the apparatus manufactures airflow directing segments as follows. The adhesive applicator 108 applies adhesive to the web material 104 as it is fed from the bobbin 102. The adhesive applicator is arranged such that the continuous line of adhesive is applied adjacent to a first longitudinal edge of the web material. The web material is guided about the mandrel 120, and formed into a channel by the first roller 110. The channel of web material is then substantially closed by the set of second rollers 112, 114 such that the adhesive bonds the first and second longitudinal edges together. In this example, the adhesive is heat activated, and as such heater 118 applies heat to the seam formed between the first and second longitudinal edges to set the adhesive. The third roller 116 then applies pressure to the seam, and compresses the seam between the roller and the mandrel to ensure a substantially air impermeable seam is produced. Porous material is then provided about the formed closed tube. Excess adhesive in the region of the seam may be used to secure the porous material to the formed closed tube. Outer wrapper material is then provided about the porous material to form a substantially continuous airflow directing segment.

In one example, the apparatus further comprises means for providing additional material within the porous material. The additional material may be provided by an adhesive applicator, or a bead hopper or the like. The additional material is provided within the porous material to create a flow-restriction to increase the resistance-to-draw through the volume occupied by the porous material in the region of the additional material. In one example, the additional material is provided at the middle of the airflow directing segment.

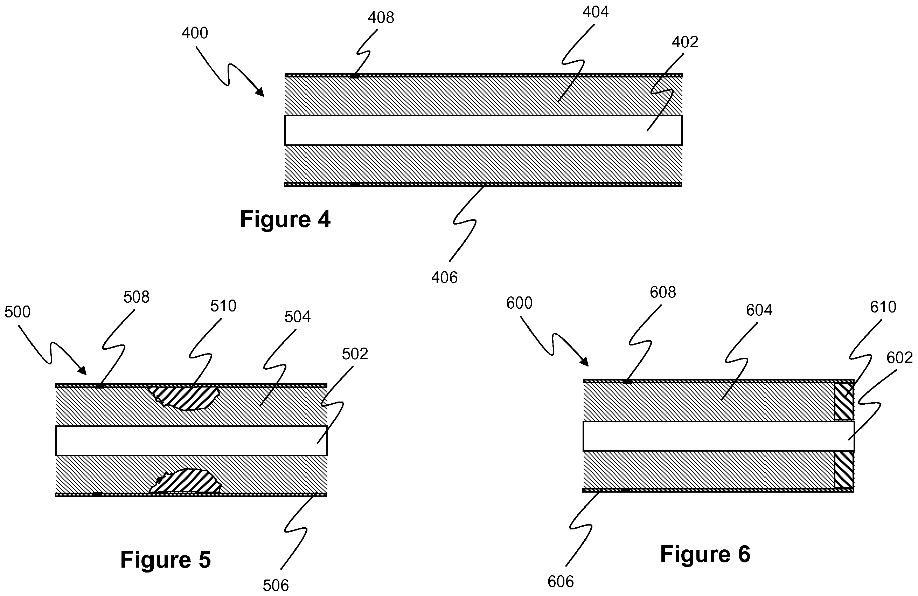

One example of a discrete airflow directing segment 400 manufactured according to the present invention is shown in Figure 4. The airflow directing segment 400 comprises a hollow tube 402 positioned centrally within the airflow directing segment. The hollow tube is formed as described above. The hollow tube 402 is surrounded by a porous material 404, such as cellulose acetate tow, and wrapped in an outer web material 406. The outer web material is an air impermeable material, such as cigarette paper. The porous material preferably has a substantially homogeneous morphology. In the example shown, the airflow directing segment is provided with a plurality of air inlets 408 positioned circumferentially around the airflow directing segment. The air inlets 408 are perforations within the outer wrapper 406. The air inlets may be provided in the wrapper web material online, or offline.

A further example of a discrete airflow directing segment 500 manufactured according to the present invention is shown in Figure 5. Similarly to the airflow directing segment 400, the segment comprises a hollow tube 502 positioned centrally within the airflow directing segment. The hollow tube is formed as described above. The hollow tube 502 is surrounded by a porous material 504, such as cellulose acetate tow, and wrapped in an outer web material 506. The porous material preferably has a substantially homogeneous morphology. In the example shown, the airflow directing segment is provided with a plurality of air inlets 508 positioned circumferentially around the airflow directing segment. The air inlets 508 are perforations within the outer wrapper 506. Additional material, in this example adhesive, is provided within the porous material 504 to reduce the cross-sectional flow area of the airflow directing segment.

A yet further example of a discrete airflow directing segment 600 manufactured according to the present invention is shown in Figure 6. Similarly to the airflow directing segment 400, the segment comprises a hollow tube 602 positioned centrally within the airflow directing segment. The hollow tube is formed as described above. The hollow tube 602 is surrounded by a porous material 604, such as cellulose acetate tow, and wrapped in an outer web material 606. The porous material preferably has a substantially homogeneous morphology. In the example shown, the airflow directing segment is provided with a plurality of air inlets 608 positioned circumferentially around the airflow directing segment. The air inlets 608 are perforations within the outer wrapper 606. A seal 610 is provided at one end of the airflow directing segment. The seal may be substantially air impermeable. The seal may be formed by applying adhesive, heating the porous material sufficiently to melt the material and then solidify forming the seal, or by any other suitable means.

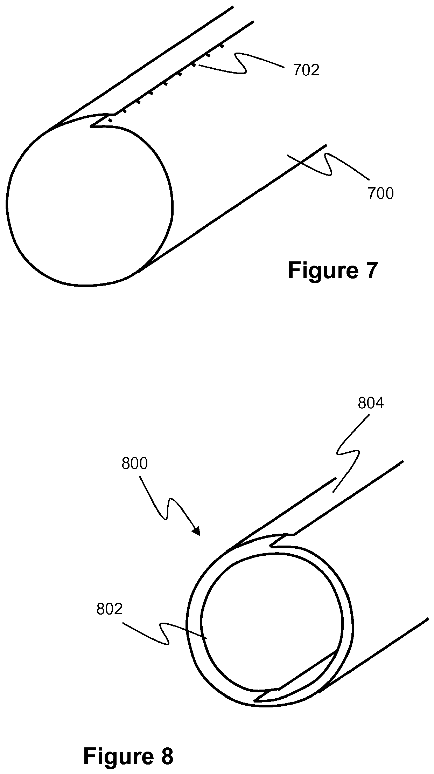

Figure 7 shows a formed closed tube 700, such as the tubes 126, 402, 502, and 602. As can be seen, perforations 702 are provided in the web material. The adhesive provided on the first longitudinal edge of the web material is thus able to flow into the perforations to form a stronger bond between the first and second longitudinal edges.

Figure 8 shows an alternative formed closed tube manufactured according to the invention. The first tube 802 is formed as described above. In this alternative, a second tube 804 is formed around the first tube in a similar manner as described above. As will be appreciated, a second bobbin of web material feeds the second web material to a second set of forming rollers. The rollers are substantially the same as the rollers as described above. As can be seen, the seam of the second tube 804 is provided diametrically opposite the seam of the first tube 802 to improve the air impermeability of the formed hollow tube 800. To enable such a second tube to be provided, the second web material is fed from the opposite side of the mandrel 120 as the first web material.

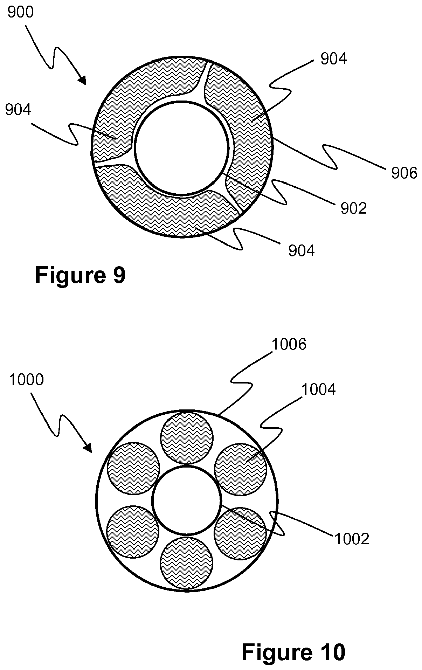

Figure 9 shows a cross-section of an airflow directing segment 900 manufactured according to one embodiment of the invention. As can be seen, the airflow directing segment 900 comprises a hollow central tube 902, porous material 904 surrounding the hollow tube 902 and an outer wrapper. The hollow tube is manufactured as described above. Three braids of porous material 904 are provided and are positioned equally about the hollow tube. Providing three braids of porous material enables the material to be more easily evenly distributed around the hollow tube. Figure 10 shows a similar, but alternative embodiment of an airflow directing segment 1000 comprising a hollow central tube 1002, six braids of porous material 1004, and an outer wrapper 1006.

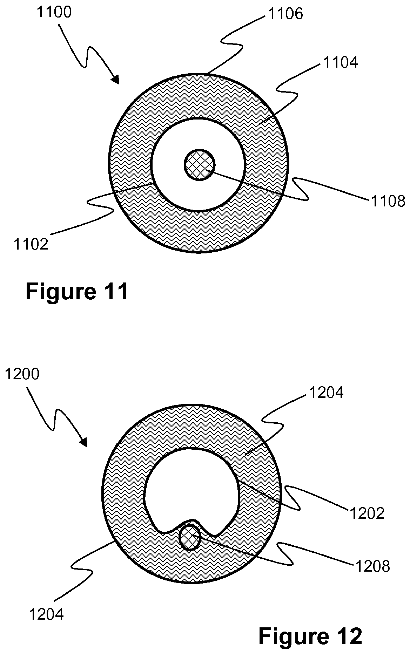

Figure 11 shows a cross-section of an example of an airflow directing segment 1100. The segment 1100 comprises a hollow central tube 1102, surrounded by porous material 1104 and wrapped in an outer wrapper 1106. The porous material 1104 may be comprised of a plurality of braids of porous material. This example further comprises a flavour thread 1108 which comprises a flavourant such as menthol. The flavour thread is provided within the hollow tube by feeding it through the mandrel. In one example, the flavour thread 1108 is attached to the inner wall of the hollow tube using adhesive, the adhesive may be the excess adhesive from bonding the first and second longitudinal edges of the web material.

Figure 12 shows a cross-section of an alternative example of an airflow directing segment 1200 also comprising a flavour thread. The segment 1200 comprises comprises a hollow central tube 1202, surrounded by porous material 1204 and wrapped in an outer wrapper 1206. The porous material 1204 may be comprised of a plurality of braids of porous material. This example further comprises a flavour thread 1208 which comprises a flavourant such as menthol. The flavour thread is provided without the hollow tube by feeding it with the porous material. In one example, the flavour thread 1208 is attached to the outer wall of the hollow tube using adhesive, the adhesive may be the excess adhesive from bonding the first and second longitudinal edges of the web material.

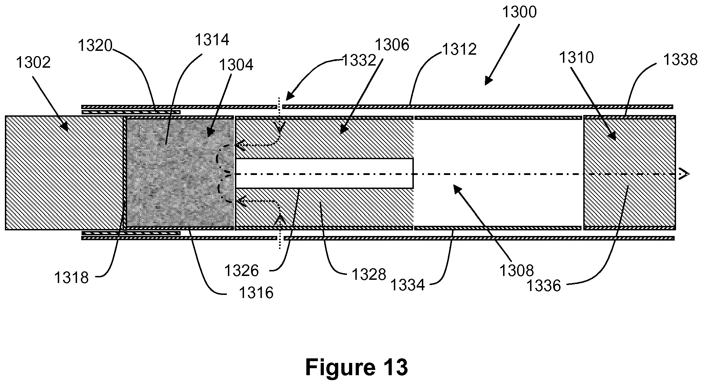

Figure 13 shows an example of a smoking article comprising an airflow directing segment manufactured according to the present invention. The smoking article 1300 comprises a combustible carbonaceous heat source 1302, an aerosol-forming substrate 1304, an airflow directing segment 1306 manufactured according to the present invention, an expansion chamber 1308 and a mouthpiece 1310 in abutting coaxial alignment. The combustible carbonaceous heat source 1302, aerosol-forming substrate 1304, airflow directing element 1306, elongate expansion chamber 1308 and mouthpiece 1310 are overwrapped in an outer wrapper 1312 of cigarette paper of low air permeability.

The aerosol-forming substrate 1304 is located immediately downstream of the combustible carbonaceous heat source 1302 and comprises a cylindrical plug 1314 of tobacco material comprising glycerine as aerosol former and circumscribed by plug wrap 1316.

A non-combustible, substantially air impermeable barrier is provided between the downstream end of the combustible heat source 1302 and the upstream end of the aerosol-forming substrate 1304. As shown in Figure 1, the non-combustible, substantially air impermeable barrier consists of a non-combustible, substantially air impermeable, barrier coating 1318, which is provided on the entire rear face of the combustible carbonaceous heat source 1302.

A heat-conducting element 1320 consisting of a tubular layer of aluminium foil surrounds and is in direct contact with a rear portion of the combustible carbonaceous heat source 1302 and an abutting front portion of the aerosol-forming substrate 1304. As shown in Figure 1, a rear portion of the aerosol-forming substrate 1304 is not surrounded by the heat-conducting element 1320.

The airflow directing segment 1306 is located downstream of the aerosol-forming substrate 1304 and comprises an open-ended, substantially air impermeable hollow tube 1326 made of, for example, cardboard, which is of reduced diameter compared to the aerosol-forming substrate 1304. The upstream end of the open-ended hollow tube 1326 abuts the aerosol-forming substrate 1304. The open-ended hollow tube 1326 is circumscribed by a porous material 1328 made of, for example, cellulose acetate tow, which is of substantially the same diameter as the aerosol-forming substrate 1304.

As also shown in Figure 13, a circumferential arrangement of air inlets 1332 is provided in the outer wrapper 1312 circumscribing the inner wrapper.

The expansion chamber 1308 is located downstream of the airflow directing element 1306 and comprises an open-ended hollow tube 1334 made of, for example, cardboard, which is of substantially the same diameter as the aerosol-forming substrate 1304.

The mouthpiece 1310 of the smoking article 1300 is located downstream of the expansion chamber 1308 and comprises a cylindrical plug 1336 of cellulose acetate tow of very low filtration efficiency circumscribed by filter plug wrap 1338. The mouthpiece 1310 may be circumscribed by tipping paper (not shown).

The embodiments and examples described above illustrate but do not limit the invention.

## Claims

1. A method of manufacturing an airflow directing segment (400) for a smoking article (1300), comprising the steps of:
feeding a substantially continuous web of material (104), the web material having a first longitudinal edge and a second longitudinal edge;
applying adhesive (106) to a first side of the web material, adjacent the first edge of the web material;
forming the web material into a channel;
forming the channel of web material into a closed tube, the first edge overlapping with the second edge;
compressing the tube of web material to adhere the first side of the first edge to the second side of the second edge;
feeding at least one substantially continuous porous material (124) about the formed tube (126, 802) of web material to form a substantially continuous airflow directing segment; and
cutting the substantially continuous airflow directing segment to form discrete airflow directing segments.

2. A method according to Claim 1, wherein the porous material (124) is affixed to the formed tube (126) using the adhesive (106) applied to the first side of the web material (104).

3. A method according to Claim 1 or 2, further comprising wrapping the airflow directing segment (400) in an outer web material (406).

4. A method according Claim 1, 2 or 3, further comprising controlling the external conditions adjacent the web material (104) in the region adjacent the adhesive (106).

5. A method according to Claim 4, wherein the step of controlling the external conditions adjacent the web material (104) includes controlling the temperature.

6. A method according to any of Claims 1 to 5, further comprising:
feeding a further substantially continuous web of material, the further web material having a first longitudinal edge and a second longitudinal edge;
applying adhesive to a first side of the further web material, adjacent the first edge of the further web material;
forming the further web material into a channel partially surrounding the formed tube (802) of web material;
forming the channel of further web material into a closed tube (804) enclosing the formed tube of web material, the first edge of the further web material overlapping the second edge of the further web material;
controlling the external conditions adjacent the further web material in the region adjacent the adhesive; and
compressing the tube of further web material to adhere the first side of the first edge of the further web material to the second side of the second edge of the further web material;
wherein, the overlapping portion of the further web material is spaced apart from the overlapping portion of the web material.

7. A method according to Claim 3 or any of Claims 4, 5 or 6 when dependent on Claim 3, further comprising providing additional material at at least one position within the volume occupied by the porous material (124) to increase the resistance-to-draw through the volume occupied by the porous material.

8. A method according to Claim 7, wherein the additional material is provided at a position substantially equidistant from each end of the airflow directing segment (400).

9. A method according to any of the preceding claims, wherein the step of feeding at least one substantially continuous porous material, comprises feeding two or more substantially continuous porous materials, the two or more porous materials being provided substantially symmetrically about the formed tube (126).

10. Apparatus (100) for manufacturing an airflow directing segment (400) for a smoking article (1300), comprising:
a feeder (102) for feeding a substantially continuous web of material (104), the web material having a first longitudinal edge and a second longitudinal edge;
means (108) for applying adhesive (106) to a first side of the web material, adjacent the first edge of the web material;
means (110) for forming the web material into a channel;
means (112, 114) for forming the channel of web material into a closed tube, the first edge overlapping the second edge;
means (116) for compressing the tube of web material to adhere the first side of the first edge to the second side of the second edge to form a formed tube (126) of web material;
at least one feeder, the or each at least one feeder being configured to feed a substantially continuous porous material (124) about the formed tube of web material to form a substantially continuous airflow directing segment; and
a cutter for cutting the substantially continuous airflow directing segment to form discrete airflow directing segments.

11. Apparatus (100) according to Claim 10, further comprising means for controlling the external conditions adjacent the web material (104) in the region adjacent the adhesive (106);

12. Apparatus (100) according to Claim 10 or 11, wherein the means (110) for forming the web material (104) into a channel comprises a first roller (110), the first roller having a substantially symmetrical concave contact surface.

13. Apparatus (100) according to Claim 10, 11 or 12, wherein the means (112, 114) for forming the channel of web material (104) into a closed tube comprises a set of second rollers (112, 114), each of the second rollers having a non-symmetrical concave contact surface.

14. Apparatus (100) according to any of Claims 10 to 13, wherein the compressing means (116) comprises a third roller (116), the third roller configured to have a substantially symmetrical concave contact surface for ensuring a closed joint between the first edge and the second edge.

15. Apparatus (100) according to Claim 14, wherein the compressing means (116) further comprises a mandrel (120), wherein the mandrel is provided within the closed tube such that the joint between the first edge and the second edge is compressed between the mandrel and the third roller.

16. Apparatus (100) according to any of Claims 10 to 15, further comprising means for wrapping the airflow directing segment in an outer web material.

17. Apparatus (100) according to Claim 16, further comprising means for providing additional material at at least one position within the volume occupied by the porous material (124) to increase the resistance-to-draw through the volume occupied by the porous material.

18. A smoking article (1300) comprising:
a mouthpiece (1310);
an aerosol-forming substrate (1304);
a combustible heat source (1302); and
an airflow directing segment (1306) made, according to the method of any of claims 1 to 9, or by the apparatus (100) of any of Claims 10 to 17,
wherein the airflow directing segment is longitudinally adjacent the aerosol-forming substrate and comprises an open-ended hollow tube circumscribed by a porous material, wherein the open-ended hollow tube is formed from a web material, the longitudinal edges of which are joined at a seam by a continuous line of adhesive.

## Patentansprüche

1. Verfahren zum Herstellen eines Luftstromführungssegments (400) für einen Raucherartikel (1300), folgende Schritte umfassend:
Zuführen einer im Wesentlichen kontinuierlichen Materialbahn (104), wobei das Bahnmaterial eine erste Längskante und eine zweite Längskante aufweist;
Aufbringen von Klebstoff (106) auf eine erste Seite des Bahnmaterials neben der ersten Kante des Bahnmaterials;
Ausbilden des Bahnmaterials in einen Kanal;
Ausbilden des Kanals des Bahnmaterials in eine geschlossene Röhre, wobei die erste Kante die zweite Kante überlappt;
Zusammendrücken der Röhre des Bahnmaterials, um die erste Seite der ersten Kante an der zweiten Seite der zweiten Kante anzuhaften;
Zuführen mindestens eines im Wesentlichen kontinuierlichen porösen Materials (124) um die ausgebildete Röhre (126, 802) des Bahnmaterials, um ein im Wesentlichen kontinuierliches Luftstromführungssegment auszubilden; und
Abschneiden des im Wesentlichen kontinuierlichen Luftstromführungssegments, um einzelne Luftstromführungssegmente auszubilden.

2. Verfahren nach Anspruch 1, wobei das poröse Material (124) an der ausgebildeten Röhre (126) mithilfe von Klebstoff (106) befestigt ist, der auf der ersten Seite des Bahnmaterials (104) aufgetragen wird.

3. Verfahren nach Anspruch 1 oder 2, ferner umfassend das Wickeln des Luftströmführungssegments (400) in ein äußeres Bahnmaterial (406).

4. Verfahren nach Anspruch 1, 2 oder 3, ferner umfassend das Kontrollieren der externen Bedingungen neben dem Bahnmaterial (104) in der Region neben dem Klebstoff (106).

5. Verfahren nach Anspruch 4, wobei der Schritt des Kontrollierens der externen Bedingungen neben dem Bahnmaterial (104) das Kontrollieren der Temperatur beinhaltet.

6. Verfahren nach einem der Ansprüche 1 bis 5, ferner umfassend:
Zuführen einer weiteren im Wesentlichen kontinuierlichen Materialbahn, wobei das weitere Bahnmaterial eine erste Längskante und eine zweite Längskante aufweist;
Aufbringen von Klebstoff auf eine erste Seite des weiteren Bahnmaterials neben der ersten Kante des weiteren Bahnmaterials;
Ausbilden des weiteren Bahnmaterials in einen Kanal, der die ausgebildete Röhre (802) des Bahnmaterials teilweise umgibt;
Ausbilden des Kanals des weiteren Bahnmaterials in eine geschlossene Röhre (804), die die ausgebildete Röhre des Bahnmaterials umschließt, wobei die erste Kante des weiteren Bahnmaterials die zweite Kante des weiteren Bahnmaterials überlappt;
Kontrollieren der externen Bedingungen neben dem weiteren Bahnmaterial in der Region neben dem Klebstoff; und
Zusammendrücken der Röhre des weiteren Bahnmaterials, um die erste Seite der ersten Kante des weiteren Bahnmaterials an der zweiten Seite der zweiten Kante des weiteren Bahnmaterials anzuhaften;
wobei der überlappende Abschnitt des weiteren Bahnmaterials von dem überlappenden Abschnitt des Bahnmaterials beabstandet ist.

7. Verfahren nach Anspruch 3 oder einem der Ansprüche 4, 5 oder 6, wenn abhängig von Anspruch 3, ferner umfassend das Bereitstellen von zusätzlichem Material an mindestens einer Position innerhalb des Volumens, das durch das poröse Material (124) belegt wird, um den Zugwiderstand durch das Volumen, das durch das poröse Material belegt wird, zu erhöhen.

8. Verfahren nach Anspruch 7, wobei das zusätzliche Material an einer Position bereitgestellt wird, die im Wesentlichen abstandsgleich von jedem Ende des Luftströmführungssegments (400) ist.

9. Verfahren nach einem der vorstehenden Ansprüche, wobei der Schritt des Zuführens mindestens eines im Wesentlichen kontinuierlichen porösen Materials das Zuführen von zwei oder mehr im Wesentlichen kontinuierlichen porösen Materialien umfasst, wobei die zwei oder mehr porösen Materialien im Wesentlichen symmetrisch um die ausgebildete Röhre (126) bereitgestellt werden.

10. Vorrichtung (100) für das Herstellen eines Luftstromführungssegments (400) für einen Raucherartikel (1300), umfassend:
eine Zuführvorrichtung (102) zum Zuführen einer im Wesentlichen kontinuierlichen Materialbahn (104), wobei das Bahnmaterial eine erste Längskante und eine zweite Längskante aufweist;
Mittel (108) für das Aufbringen von Klebstoff (106) auf eine erste Seite des Bahnmaterials neben der ersten Kante des Bahnmaterials;
Mittel (110) für das Ausbilden des Bahnmaterials in einen Kanal;
Mittel (112, 114) für das Ausbilden des Kanals des Bahnmaterials in eine geschlossene Röhre, wobei die erste Kante die zweite Kante überlappt;
Mittel (116) für das Zusammendrücken der Röhre des Bahnmaterials, um die erste Seite der ersten Kante an der zweiten Seite der zweiten Kante anzuhaften, um eine ausgebildete Röhre (126) des Bahnmaterials auszubilden;
mindestens eine Zuführvorrichtung, wobei die oder jede der mindestens einen Zuführvorrichtung konfiguriert ist, um mindestens ein im Wesentlichen kontinuierliches poröses Material (124) um die ausgebildete Röhre des Bahnmaterials zuzuführen, um ein im Wesentlichen kontinuierliches Luftstromführungssegment auszubilden; und
eine Schneidvorrichtung für das Abschneiden des im wesentlichen kontinuierlichen Luftstromführungssegments, um einzelne Luftstromführungssegmente auszubilden.

11. Vorrichtung (100) nach Anspruch 10, ferner umfassend Mittel für das Kontrollieren der externen Bedingungen neben dem Bahnmaterial (104) in der Region neben dem Klebstoff (106).

12. Vorrichtung (100) nach Anspruch 10 oder 11, wobei die Mittel (110) für das Ausbilden des Bahnmaterials (104) in einem Kanal eine erste Walze (110) umfassen, wobei die erste Walze eine im Wesentlichen symmetrische, konkave Kontaktfläche aufweist.

13. Vorrichtung (100) nach Anspruch 10, 11 oder 12, wobei die Mittel (112, 114) für das Ausbilden des Kanals des Bahnmaterials (104) in eine geschlossene Röhre einen Satz von zweiten Walzen (112, 114) umfasst, wobei jede der zweiten Walzen eine nicht symmetrische, konkave Kontaktfläche aufweist.

14. Vorrichtung (100) nach einem der Ansprüche 10 bis 13, wobei das Zusammendrückmittel (116) eine dritte Walze (116) umfasst, wobei die dritte Walze konfiguriert ist, um eine im Wesentlichen symmetrische, konkave Kontaktfläche für das Sicherstellen einer geschlossenen Fuge zwischen der ersten Kante und der zweiten Kante aufzuweisen.

15. Vorrichtung (100) nach Anspruch 14, wobei das Zusammendrückmittel (116) ferner einen Dorn (120) umfasst, wobei der Dorn innerhalb der geschlossenen Röhre bereitgestellt wird, sodass die Fuge zwischen der ersten Kante und der zweiten Kante zwischen dem Dorn und der dritten Walze zusammengedrückt wird.

16. Vorrichtung (100) nach einem der Ansprüche 10 bis 15, ferner umfassend Mittel für das Wickeln des Luftstromführungssegments in ein äußeres Bahnmaterial.

17. Vorrichtung (100) nach Anspruch 16, ferner umfassend Mittel für das Bereitstellen von zusätzlichem Material an mindestens einer Position innerhalb des Volumens, das durch das poröse Material (124) belegt wird, um den Zugwiderstand durch das Volumen, das durch das poröse Material belegt wird, zu erhöhen.

18. Raucherartikel (1300) umfassend:
ein Mundstück (1310);
ein aerosolbildendes Substrat (1304);
eine brennbare Wärmequelle (1302); und
ein Luftstromführungssegment (1306), hergestellt gemäß dem Verfahren nach einem der Ansprüche 1 bis 9 oder durch die Vorrichtung (100) nach einem der Ansprüche 10 bis 17,
wobei das Luftstromführungssegment sich längs neben dem aerosolbildenden Substrat befindet und eine hohle Röhre mit offenem Ende umfasst, die durch ein poröses Material umgeben wird, wobei die hohle Röhre aus einem Bahnmaterials ausgebildet ist, dessen Längskanten an einer Naht durch eine kontinuierliche Linie Klebstoff verbunden sind.

## Revendications

1. Procédé pour la fabrication d'un segment directeur d'écoulement d'air (400) pour un article à fumer (1300), comprenant les étapes de :
l'alimentation d'une feuille sensiblement continue de matière (104), la matière de feuille présentant un premier bord longitudinal et un deuxième bord longitudinal ;
l'application d'un adhésif (106) à un premier côté de la matière de feuille, adjacent au premier bord de la matière de feuille ;
la formation de la matière de feuille en un canal ;
la formation du canal de matière de feuille en un tube fermé, le premier bord chevauchant le deuxième bord ;
la compression du tube de matière de feuille pour faire adhérer le premier côté du premier bord au deuxième côté du deuxième bord ;
l'alimentation d'au moins une matière sensiblement poreuse continue (124) autour du tube formé (126, 802) de matière de feuille dans le but de former un segment directeur d'écoulement d'air sensiblement continu ; et
le coupage du segment directeur d'écoulement d'air sensiblement continu dans le but de former des segments directeurs d'écoulement d'air séparés.

2. Procédé selon la revendication 1, dans lequel la matière poreuse (124) est apposée au tube formé (126) en utilisant l'adhésif (106) appliqué sur le premier côté de la matière de feuille (104).

3. Procédé selon la revendication 1 ou 2, comprenant en outre l'enveloppement du segment directeur d'écoulement d'air (400) dans une matière externe de feuille (406).

4. Procédé selon la revendication 1, 2 ou 3, comprenant en outre la commande des conditions externes adjacentes à la matière de feuille (104) dans la zone adjacente à l'adhésif (106) .

5. Procédé selon la revendication 4, dans lequel l'étape de commande des conditions externes adjacentes à la matière de feuille (104) inclut le contrôle de la température.

6. Procédé selon l'une quelconque des revendications 1 à 5, comprenant en outre :
l'alimentation d'une feuille sensiblement continue supplémentaire de matière, la matière de feuille supplémentaire présentant un premier bord longitudinal et un deuxième bord longitudinal ;
l'application d'un adhésif à un premier côté de la matière de feuille supplémentaire, adjacent au premier bord de la matière de feuille supplémentaire ;
la formation de la matière de feuille supplémentaire en un canal entourant partiellement le tube formé (802) de matière de feuille ;
la formation du canal de matière de feuille supplémentaire en un tube fermé (804) renfermant le tube formé de matière de feuille, le premier bord de la matière de feuille supplémentaire chevauchant le deuxième bord de la matière de feuille supplémentaire ;
la commande des conditions externes adjacentes à la matière de feuille supplémentaire dans la zone adjacente à l'adhésif ; et
la compression du tube de matière de feuille supplémentaire pour faire adhérer le premier côté du premier bord de la matière de feuille supplémentaire au deuxième côté du deuxième bord de la matière de feuille supplémentaire ;
dans lequel, la partie chevauchante de la matière de feuille supplémentaire est espacée de la partie chevauchante de la matière de feuille.

7. Procédé selon la revendication 3 ou selon l'une quelconque des revendications 4, 5 ou 6 lorsqu'il est en fonction de la revendication 3, comprenant en outre la fourniture de matière supplémentaire au niveau d'au moins une position au sein du volume occupé par la matière poreuse (124) afin d'augmenter la résistance au tirage via le volume occupé par la matière poreuse.

8. Procédé selon la revendication 7, dans lequel la matière supplémentaire est fournie au niveau d'une position sensiblement équidistante de chaque extrémité du segment directeur d'écoulement d'air (400).

9. Procédé selon l'une quelconque des revendications précédentes, dans lequel l'étape d'alimentation d'au moins une matière poreuse sensiblement continue, comprend l'alimentation de deux ou davantage de matières poreuses sensiblement continues, les deux ou davantage de matières poreuses étant fournies de manière sensiblement symétrique autour du tube formé (126).

10. Appareil (100) pour la fabrication d'un segment directeur d'écoulement d'air (400) pour un article à fumer (1300), comprenant :
un dispositif d'alimentation (102) pour alimenter une feuille sensiblement continue de matière (104), la matière de feuille présentant un premier bord longitudinal et un deuxième bord longitudinal ;
des moyens (108) pour l'application d'un adhésif (106) à un premier côté de la matière de feuille, adjacent au premier bord de la matière de feuille ;
des moyens (110) pour la formation de la matière de feuille en un canal ;
des moyens (112, 114) pour la formation du canal de matière de feuille en un tube fermé, le premier bord chevauchant le deuxième bord ;
des moyens (116) pour la compression du tube de matière de feuille pour faire adhérer le premier côté du premier bord au deuxième côté du deuxième bord dans le but de former un tube formé (126) de matière de feuille ;
au moins un dispositif d'alimentation, au moins le ou chaque dispositif d'alimentation étant configuré pour alimenter une matière poreuse sensiblement continue (124) autour du tube formé de matière de feuille dans le but de former un segment directeur d'écoulement d'air sensiblement continu ; et
un coupeur pour le coupage du segment directeur d'écoulement d'air sensiblement continu dans le but de former des segments directeurs d'écoulement d'air séparés.

11. Appareil (100) selon la revendication 10, comprenant en outre des moyens pour la commande des conditions externes adjacentes à la matière de feuille (104) dans la zone adjacente à l'adhésif (106) ;

12. Appareil (100) selon la revendication 10 ou selon la revendication 11, dans lequel les moyens (110) pour la formation de la matière de feuille (104) en un canal comprennent un premier rouleau (110), le premier rouleau ayant une surface de contact sensiblement concave symétrique.

13. Appareil (100) selon la revendication 10, 11 ou 12, dans lequel les moyens (112, 114) pour la formation du canal de matière de feuille (104) en un tube fermé comprennent un ensemble de deuxièmes rouleaux (112, 114), chacun des deuxièmes rouleaux ayant une surface de contact concave asymétrique.

14. Appareil (100) selon l'une quelconque des revendications 10 à 13, dans lequel la compression des moyens (116) comprend un troisième rouleau (116), le troisième rouleau configuré pour présenter une surface de contact sensiblement concave symétrique pour assurer un joint fermé entre le premier bord et le deuxième bord.

15. Appareil (100) selon la revendication 14, dans lequel la compression des moyens (116) comprend en outre un mandrin (120), dans lequel le mandrin est fourni au sein du tube fermé de sorte que le joint entre le premier bord et le deuxième bord est compressé entre le mandrin et le troisième rouleau.

16. Appareil (100) selon l'une quelconque des revendications 10 à 15, comprenant en outre des moyens pour envelopper le segment directeur d'écoulement d'air dans une matière externe de feuille.

17. Appareil (100) selon la revendication 16, comprenant en outre des moyens pour la fourniture de matière supplémentaire au niveau d'au moins une position au sein du volume occupé par la matière poreuse (124) afin d'augmenter la résistance au tirage via le volume occupé par la matière poreuse.

18. Article à fumer (1300) comprenant :
un embout buccal (1310) ;
un substrat formant aérosol (1304) ;
une source de chaleur combustible (1302) ; et
un segment directeur d'écoulement d'air (1306) fabriqué conformément au procédé selon l'une quelconque des revendications 1 à 9, ou grâce à l'appareil (100) selon l'une quelconque des revendications 10 à 17,
dans lequel le segment directeur d'écoulement d'air est longitudinalement adjacent au substrat formant aérosol et comprend un tube creux à extrémité ouverte entouré par une matière poreuse, dans lequel le tube creux à extrémité ouverte est formé à partir d'une matière de feuille, les bords longitudinaux qui sont joints au niveau d'une jonction grâce à une ligne continue d'adhésif.
